# EUROPÄISCHE PATENTSCHRIFT

(11) **EP 3 095 692 B1**
(45) Veröffentlichungstag und Bekanntmachung des Hinweises auf die Patenterteilung: **15.01.2020**
(21) Anmeldenummer: 16168018.6
(22) Anmeldetag: 03.05.2016
(51) Int. Cl.: B64C 25/26

(54) **VERRIEGELUNGSVORRICHTUNG EINES LUFTFAHRZEUGFAHRWERKS**
LOCKING DEVICE FOR AN AIRCRAFT LANDING GEAR
DISPOSITIF DE VERROUILLAGE D'UN TRAIN D'ATTERRISSAGE

(30) Priorität: 19.05.2015 DE 202015003619 U
(43) Veröffentlichungstag der Anmeldung: 23.11.2016
(73) Patentinhaber: Liebherr-Aerospace Lindenberg GmbH, 88161 Lindenberg/Allgäu (DE)
(72) Erfinder: Häufle, Stephan, 88085 Langenargen (DE); Blöß, Torsten, 88239 Wangen (DE); Jocham, Markus, 88279 Amtzell (DE)
(74) Vertreter: Herrmann, Uwe

(56) Entgegenhaltungen:
- EP-A2- 2 433 865
- WO-A1-94/07743
- WO-A1-2009/079785
- DE-C- 731 592
- GB-A- 499 500
- US-A- 2 132 682
- US-A1- 2012 187 239

## Beschreibung

Die vorliegende Erfindung betrifft ein Bug- oder Heckfahrwerk für einen Helikopter.

Typischerweise werden Fahrwerke von Luftfahrzeugen, insbesondere von Flugzeugen aber auch bei Helikoptern, für einen Lande- bzw. einen Startvorgang aus einem Luftfahrzeughauptkörper ausgefahren. In einer Flugphase wird hingegen das Fahrwerk eingefahren, um den Luftwiderstand zu minimieren.

Nach dem Stand der Technik wird in einem ausgefahrenen Zustand eines Fahrwerks dieses über eine Knickstrebe verriegelt. Diese Knickstrebe verhindert das ungewollte Einfahren des Fahrwerks bei einer Krafteinwirkung. Zudem dient die Knickstrebe zum Übertragen der an das Fahrwerk angreifenden Kräfte während einer Start- bzw. einer Landephase. Die Verriegelungsvorrichtung des Fahrwerks in einem ausgefahrenen Zustand wird auch in einer analogen Weise "Downlock" genannt.

In einem eingefahrenen Zustand wird das Fahrwerk über einen so genannten "Uplock" gehalten. Beispielsweise umfasst eine solche Uplock-Vorrichtung einen Haken, der einen an dem Fahrwerk befestigten Bolzen fängt und ein Ausfahren des Fahrwerks verhindert.

Die Uplock- und Downlock-Vorrichtung eines herkömmlichen Luftfahrzeugfahrwerks benötigt eine Vielzahl von Bauteilen und einen gewissen Bauraum. Zudem wird durch die Bauteile auch das Gesamtgewicht des Luftfahrzeugs erhöht, was wiederum zu einer vergrößerten Kraftstoffaufnahme des Luftfahrzeugs führt.

Das Dokument DE-C1-731592 ist ein weiteres Beispiel für den Stand der Technik.

Es ist ein Ziel der vorliegenden Erfindung, eine Verriegelungsvorrichtung zu schaffen, die die vorgenannten Probleme überwindet.

Dies gelingt mit einer Verriegelungsvorrichtung eines Luftfahrzeugfahrwerks mit den Merkmalen des geltenden Anspruchs 1.

Demnach umfasst die erfindungsgemäße Vorrichtung ein Bug- oder Heckfahrwerk für einen Helikopter mit einer Verriegelungsvorrichtung zum Verriegeln des Fahrwerks in einer eingefahrenen und einer ausgefahrenen Position mit einem Verriegelungszylinder, der an einem Fahrwerksbein angeordnet ist, und einem Verriegelungsbolzen, der in dem Verriegelungszylinder verfahrbar angeordnet ist. Der Verriegelungsbolzen dient in der eingefahrenen Position und der ausgefahrenen Position des Fahrwerks dazu, das Fahrwerksbein zu fixieren bzw. zu sichern. Ein Anbindungspunkt zum Interagieren mit dem aus dem Verriegelungszylinder ausgefahrenen Verriegelungsbolzen dient dazu, das Fahrwerksbein in einem eingefahrenen und ausgefahrenen Zustand zu fixieren.

Der Verriegelungszylinder ist so ausgestattet, dass sich der darin aufgenommene Verriegelungsbolzen vollständig in den Verriegelungszylinder einschieben lässt oder auch aus diesem herausragen kann. Der Verriegelungsbolzen ist demnach in dem Verriegelungszylinder verfahrbar angeordnet. Da der Verriegelungsbolzen sowohl in einem eingefahrenen Fahrwerkszustand als auch in einem ausgefahrenen Fahrwerkszustand dazu dient, das Fahrwerksbein zu fixieren, ist es nicht mehr länger notwendig zwei separate Einheiten zum Fixieren des Fahrwerksbeins in einem eingefahrenen Zustand (Uplock) und zum Fixieren des Fahrwerksbeins in einem ausgefahrenen Zustand (Downlock) vorzusehen. Sowohl der Uplock als auch der Downlock werden mit Hilfe des in dem Verriegelungszylinder verfahrbar angeordneten Verriegelungsbolzens umgesetzt. Durch die Erfindung kann also die herkömmlicherweise verwendete Knickstrebe zum Fixieren des ausgefahrenen Fahrwerksbeins und der Uplock, mit dem das eingefahrene Fahrwerk an dem Luftfahrzeughauptkörper befestigt wird, ersetzt werden. Gleichzeitig reduziert die Positionierung der Verriegelungsvorrichtung auf dem Fahrwerksbein den notwendigen Bauraum sowie die Anzahl der notwendigen Bauelemente, die bisher beim Uplock und Downlock notwendig waren. Dadurch verringert sich auch das insgesamt notwendige Gewicht, wodurch sich eine Einsparung beim Betrieb des mit der erfindungsgemäßen Verriegelungsvorrichtung versehenen Luftfahrzeugs erreichen lässt.

Vorzugsweise ist der Verriegelungsbolzen quer zur Längsrichtung des Fahrwerkbeins verfahrbar in dem Verriegelungszylinder angeordnet. Beispielsweise weist das Fahrwerksbein eine geradlinig verlaufende Form auf, wobei der Verriegelungsbolzen senkrecht zu dieser Form ausgerichtet ist und auch senkrecht dazu verfahren werden kann. Durch Ausfahren des Verriegelungsbolzens aus dem Verriegelungszylinder wird die Bewegung des Fahrwerksbeins, die zum Übergang zwischen einem ein- und einem ausgefahrenen Zustand ausgeführt wird, verhindert. Durch das Verfahren des Verriegelungsbolzens quer zur Längsrichtung des Fahrwerksbeins ist es besonders einfach möglich, das Fahrwerksbein zu fixieren und zu sichern.

Der Verriegelungsbolzen ist in einem aus dem Verriegelungszylinder ausgefahrenen Zustand dazu ausgelegt, das Fahrwerksbein zu fixieren.

Beispielsweise greift der Verriegelungsbolzen in einem eingefahrenen Zustand des Fahrwerks in eine dafür vorgesehene Aufnahme ein, die ein Ausfahren des Fahrwerks verhindert.

Hierbei ist auch der ausgefahrene Zustand des Fahrwerkbeins umfasst, zu dessen Stabilisation bzw. Fixierung der Verriegelungskolben aus dem Verriegelungszylinder ausgefahren wird, um mit einem Anbindungspunkt zusammenzuwirken.

Die vorliegende Vorrichtung umfasst einen Anbindungspunkt zum Interagieren oder Eingreifen mit dem aus dem Verriegelungszylinder ausgefahrenen Verriegelungsbolzen, um das Fahrwerksbein in einem eingefahrenen oder einem ausgefahrenen Zustand zu fixieren.

Vorzugsweise ist der Anbindungspunkt eine Hülse zur Aufnahme des aus dem Verriegelungszylinder ausgefahrenen Verriegelungsbolzens. Es ist jedoch genauso gut denkbar, dass der Anbindungspunkt eine andere Form als eine den Verriegelungsbolzen umgebende Hülse ist.

Nach einer weiteren vorteilhaften, optionalen Fortbildung der Erfindung ist der Verriegelungsbolzen durch ein elastisches Element, vorzugsweise eine Feder oder dergleichen, vorgespannt.

Vorzugsweise wird die Vorspannung des Verriegelungsbolzens durch zwei voneinander unabhängigen Federn vorgenommen. Dies verhindert beim Ausfall einer Feder einen Systemausfall der erfindungsgemäßen Vorrichtung. Bricht also eine von den mindestens zwei unabhängigen Federn, wird die Vorspannung des Verriegelungsbolzens durch die andere noch intakte Feder vorgenommen. Durch die Redundanz der Federn wird die Ausfallwahrscheinlichkeit der Verriegelungsvorrichtung verringert.

Dabei ist es von Vorteil, wenn die Feder-Vorspannkraft des Verriegelungsbolzens den Verriegelungsbolzen in eine Richtung aus dem Verriegelungszylinder drängt.

Dies ist von Vorteil, da bei einem Ausfall des Verfahrmechanismus zum Bewegen des Verriegelungsbolzens in den Zylinder hinein bzw. aus diesem hinaus der Bolzen durch die Feder-Vorspannkraft nach außen gedrängt wird und somit nicht aus einem fixierten und gesicherten Zustand herausbewegt werden kann. Dadurch besteht nicht die Gefahr, dass ein bereits ausgefahrenes Fahrwerksbein bei einem beschädigten Verfahrmechanismus des Verriegelungsbolzens unter Krafteinwirkung einknickt und zu einer unkontrollierbaren Start- bzw. Landephase eines Luftfahrzeugs führt. Nach der Erfindung ist es nämlich vorteilhaft, dass der fixierte bzw. gesicherte Zustand des Fahrwerksbeins bei einem ausgefahrenen Verriegelungsbolzen vorliegt.

Nach einer vorteilhaften Weiterbildung der Erfindung umfasst die Vorrichtung ferner einen Motor, vorzugsweise einen Elektromotor, zum Verfahren des Verriegelungsbolzens in dem Verriegelungszylinder. Dabei kann der Elektromotor über ein Getriebe mit dem Verriegelungsbolzen gekoppelt sein, um beispielsweise eine rotatorische Bewegung des Motors in eine Linearbewegung umzuwandeln.

Darüber hinaus kann die erfindungsgemäße Vorrichtung ferner einen Schalter zum Überwachen einer Verfahrposition des Verriegelungsbolzens aufweisen.

Vorzugsweise umfasst die Vorrichtung mindestens zwei voneinander unabhängige Schalter, wobei ein Schalter zum Überwachen eines eingefahrenen Zustands und der andere Schalter zum Überwachen eines eingefahrenen Zustands des Verriegelungsbolzens vorgesehen ist.

Weiter vorteilhaft ist es, wenn die Vorrichtung mindestens zwei unabhängige Schalter zum Überwachen eines eingefahrenen Zustands des Verriegelungsbolzens und mindestens zwei unabhängige Schalter zum Überwachen eines ausgefahrenen Zustands des Verriegelungsbolzens umfasst.

Dadurch ist es möglich ein Notfallausfahren durch getrennte Signale der voneinander unabhängigen Schalter auszuführen. Im Optimalfall umfasst ein Elektromotor eine zweite Spule sowie eine getrennte elektrische Verkabelung und baut damit einen vollständig redundanten Signalkreislauf auf.

Nach einer weiteren Fortbildung der Erfindung umfasst die Vorrichtung ferner einen Temperatursensor, der in Windungen des Elektromotors integriert ist, um eine Motortemperatur zu messen. Dadurch ist es möglich, bei einem Erfassen einer von einem Normbereich abweichenden Motortemperatur diesen abzuschalten und eine Einfahr- bzw. Ausfahrfunktion des Fahrwerks zu unterbinden, bevor eine zu hohe Temperatur des Motors zu Beschädigungen führen kann.

Im Folgenden werden weitere Details und Einzelheiten anhand von Zeichnungen, die Ausführungsbeispiele der Erfindung wiedergeben, dargestellt. Es zeigen:
- Fig. 1:: Eine Prinzipskizze einer entriegelten Verriegelungsvorrichtung eines Luftfahrzeugfahrwerks,
- Fig. 2:: eine Prinzipskizze einer verriegelten Verriegelungsvorrichtung eines Luftfahrzeugfahrwerks,
- Fig. 3:: eine Perspektivdarstellung der erfindungsgemäßen Verriegelungsvorrichtung eines Luftfahrzeugfahrwerks, und
- Fig. 4:: eine Schnittansicht der erfindungsgemäßen Verriegelungsvorrichtung.

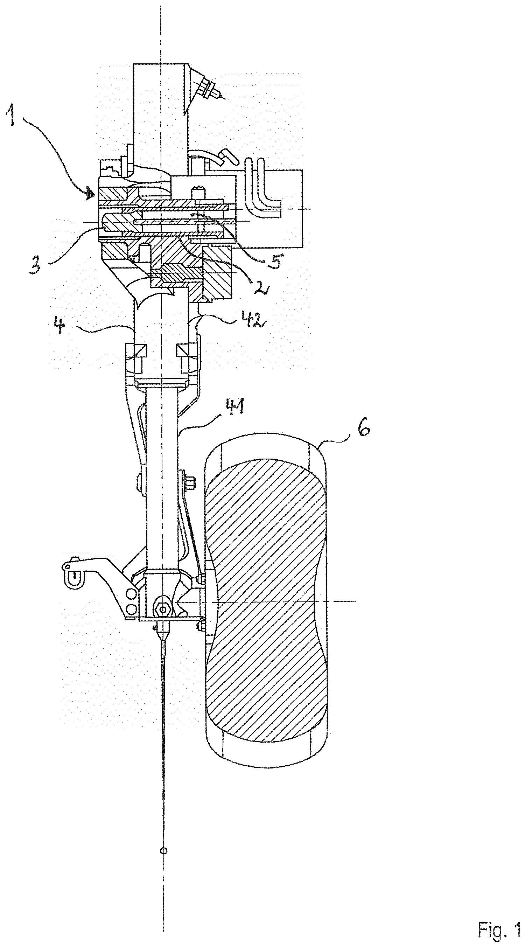

Fig. 1 zeigt ein Luftfahrzeugfahrwerk mit der erfindungsgemäßen Verriegelungsvorrichtung 1. Man erkennt einen Reifen 6, der durch ein Fahrwerksbein 4 mit einem Luftfahrzeughauptkörper (nicht dargestellt) in Verbindung steht. Das Fahrwerksbein 4 besteht aus einem fest mit dem Luftfahrzeughauptkörper in Verbindung stehenden starren Element 42, das ein dazu federndes Element 41 teilweise umschließt. Zudem sieht man, dass die Verriegelungseinheit 1 an dem starren Element 42 des Fahrwerkbeins 4 angeordnet ist. Man erkennt, dass der Verriegelungszylinder 2 einen Verriegelungsbolzen 3 in sich lagert, der über eine Feder 5 derart vorgespannt ist, dass der Verriegelungsbolzen 3 aus dem Verriegelungszylinder 2 herausgedrängt wird. Zudem erkennt man anhand von gestrichelten Orientierungslinien, dass der Verriegelungsbolzen 3 und der Verriegelungszylinder 2 in etwa quer zur Längsrichtung des Fahrwerksbeins 4 angeordnet sind. Dabei sind jedoch auch andere Orientierungen des Verriegelungsbolzens 3 und des Verriegelungszylinders 2 zur Längsrichtung des Fahrwerkbeins 4 denkbar. Diese müssen nicht notwendigerweise quer zueinander sein. Zudem ist die Verriegelungseinheit 1 in einem Zustand dargestellt, in dem sich die Verriegelungseinheit 1 in einem entriegelten Zustand befindet. Der Verrieglungsbolzen 3 befindet sich also in einem eingefahrenen Zustand.

In dem in Fig. 1 gezeigten Zustand kann das Fahrwerksbein ein- oder ausgefahren werden, da der Verriegelungsbolzen 3 sich vollständig in dem Verriegelungszylinder 2 befindet. Um zwischen einem ausgefahrenen und einem eingefahrenen Zustand wechseln zu können, ist ein Motor 5 vorgesehen. Typischerweise ist zwischen der Hülse 2 und dem Motor ein Getriebe angeordnet.

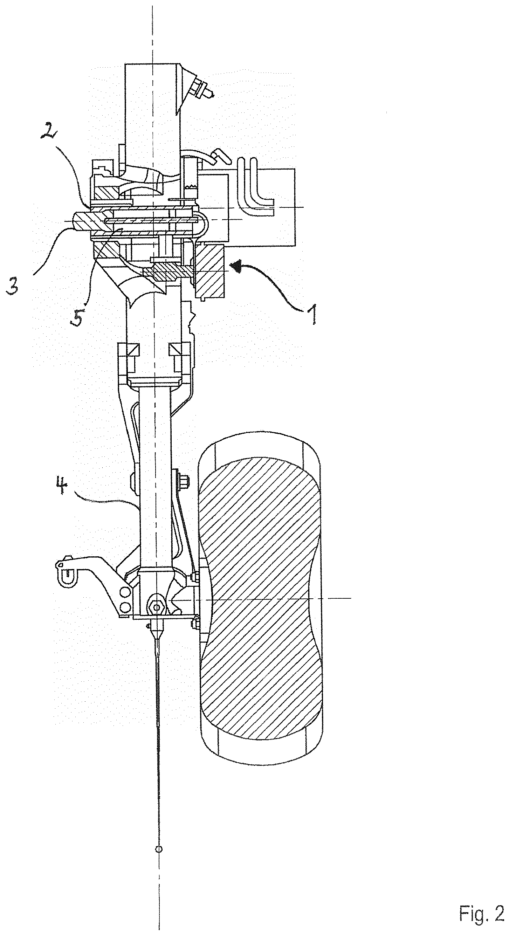

Fig. 2 zeigt die Verriegelungseinheit 1 in einem verriegelten Zustand. Man erkennt, dass der Verriegelungsbolzen 3 aus dem Verriegelungszylinder 2 hinausragt. Typischerweise greift er in diesem Zustand mit einem Anbindungspunkt (nicht dargestellt) ein, der ein Ein- oder Ausfahren des Fahrwerksbeins 4 unmöglich macht. In einem solchen verriegelten Zustand ist eine Gesamtbewegung des Fahrwerksbeins 4 demnach nicht mehr möglich. Die Bewegung wird in einem vollständig eingefahrenen oder einem vollständig ausgefahrenen Zustand durch Eingreifen in einen entsprechenden Anbindungspunkt unterbunden. In einem eingefahrenen Zustand ist beispielsweise eine Hülse vorstellbar, die fest mit der Luftfahrzeughaupteinheit verbunden ist und bei einem Eingreifen des Verriegelungsbolzens 3 eine Ausfahrbewegung des Fahrwerksbeins 4 unterbindet. In einem ausgefahrenen Zustand hingegen greift der Fahrwerksbolzen 3 in eine entsprechendes Gegenstück, die ein Einfahren des Fahrwerksbeins 4 verhindert.

Dadurch ist das Vorsehen einer Knickstrebe, die ein ungewolltes Einfahren bzw. eine ungewollte Bewegung in Einfahrrichtung unterbindet, überflüssig. Zudem wird auch der Uplock-Mechanismus, der das Fahrwerksbein 4 in seinem Fahrwerkschacht festhält nicht weiter benötigt.

Insgesamt wird eine Gewichtsersparnis bzw. die Verringerung von Bauelementen erreicht, die zu einer besseren Effizienz eines Flugzeugfahrwerks führt.

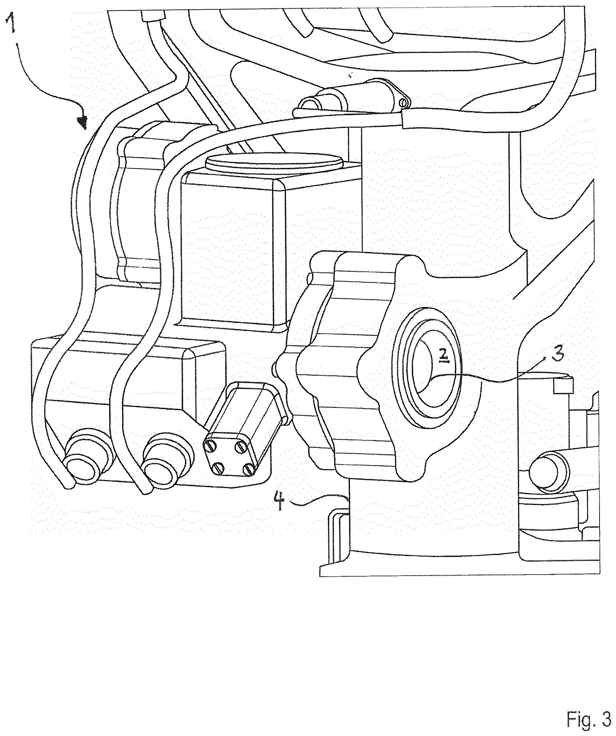

Fig. 3 zeigt eine Perspektivdarstellung der erfindungsgemäßen Verriegelungsvorrichtung. Man erkennt, dass der Verriegelungsbolzen 3 eingefahren in dem Verriegelungszylinder 2 ruht. In einem solchen Zustand ist also das Verschwenken des Fahrwerksbeins 4 aus dem Luftfahrzeughauptkörper hinaus in einen ausgefahrenen Zustand bzw. das Einfahren des Fahrwerksbeins 4 in dem Luftfahrzeughauptkörper hinein möglich.

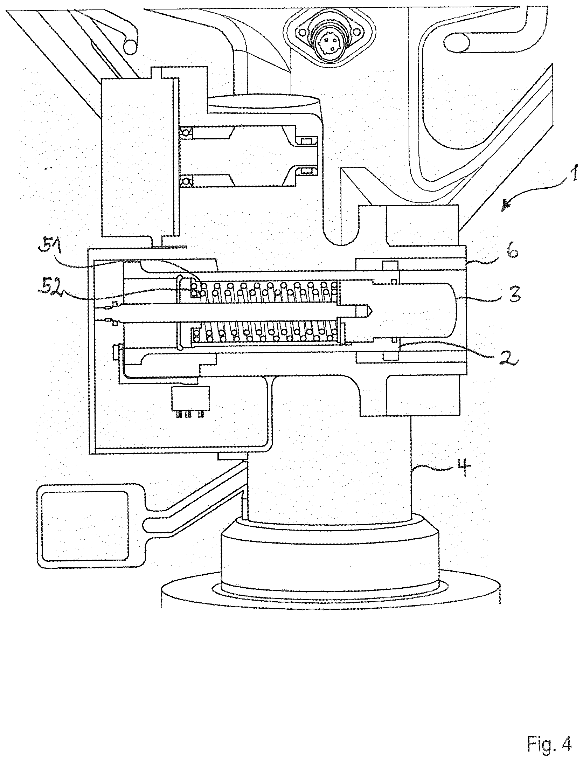

Fig. 4 zeigt eine Schnittansicht der erfindungsgemäßen Verriegelungsvorrichtung. Dabei erkennt man erneut die im Wesentlichen quer zur Längsrichtung des Fahrwerksbeins 4 verlaufende Anordnung von Verriegelungszylinder 2 und Verriegelungsbolzen 3. Erneut wird angemerkt, dass Ausrichtung quer zum Fahrwerksbein nicht zwingend erforderlich ist, sondern auch andere Orientierungen annehmen kann. Zudem erkennt man die redundante Ausführung der Federn 51, 52 die den Verriegelungsbolzen 3 in eine Richtung aus dem Verriegelungszylinder 2 drängen. Mit Hilfe eines Elektromotors wird der Verriegelungsbolzen 3 in den Verriegelungszylinder 2 bewegt. Mit dem Bezugszeichen 6 ist die Führungsbuchse bezeichnet.

Durch das Vorsehen der erfindungsgemäßen Vorrichtung ist es nicht mehr länger notwendig, eine Knickstrebe und einen Uplock bei einem Fahrwerk für ein Luftfahrzeug vorzusehen. Gleichzeitig reduziert die Positionierung der Verriegelungsvorrichtung auf dem Fahrwerksbein 4 die Anzahl der notwendigen Bauelemente und verringert den dafür notwendigen Bauraum.

## Patentansprüche

1. Bug- oder Heckfahrwerk für einen Helikopter mit einer Verriegelungsvorrichtung (1) zum Verriegeln des Fahrwerks in einer eingefahrenen und einer ausgefahrenen Position, mit einem Verriegelungszylinder (2), der an einem Fahrwerksbein (4) angeordnet ist und einem Verriegelungsbolzen (3), der in dem Verriegelungszylinder (2) verfahrbar angeordnet ist, wobei
der Verriegelungsbolzen (3) in der eingefahrenen Position und der ausgefahrenen Position des Fahrwerks dazu dient, das Fahrwerksbein (4) zu fixieren, sowie mit einem Anbindungspunkt zum Interagieren mit dem aus dem Verriegelungszylinder (2) ausgefahrenen Verriegelungsbolzen (3), um das Fahrwerksbein (4) in einem eingefahrenen und einem ausgefahrenen Zustand zu fixieren.

2. Bug- oder Heckfahrwerk nach Anspruch 1, wobei der Verriegelungsbolzen (3) bspw. quer zur Längsrichtung des Fahrwerksbeins (4) verfahrbar in dem Verriegelungszylinder (2) angeordnet ist.

3. Bug- oder Heckfahrwerk nach einem der vorhergehenden Ansprüche, wobei der Verriegelungsbolzen (3) in einem aus dem Verriegelungszylinder (2) ausgefahrenen Zustand dazu ausgelegt ist, das Fahrwerksbein (4) zu fixieren.

4. Bug- oder Heckfahrwerk nach einem der vorhergehenden Ansprüche, wobei der Anbindungspunkt eine Hülse zur Aufnahme des aus dem Verriegelungszylinder (2) ausgefahrenen Verriegelungsbolzens (3) ist.

5. Bug- oder Heckfahrwerk nach einem der vorhergehenden Ansprüche, wobei der Verriegelungsbolzen (3) durch eine Feder (5) vorgespannt ist.

6. Bug- oder Heckfahrwerk nach Anspruch 5, mit mindestens zwei voneinander unabhängigen Federn (51, 52), um den Verriegelungsbolzen (3) vorzuspannen.

7. Bug- oder Heckfahrwerk nach Anspruch 5 oder 6, wobei die Feder-Vorspannkraft des Verriegelungskolbens (3) diesen in eine Richtung aus dem Verriegelungszylinder (2) drängt.

8. Bug- oder Heckfahrwerk nach einem der vorhergehenden Ansprüche, ferner umfassend einen Elektro- oder Hydraulikmotor zum Verfahren des Verriegelungsbolzens (3) in dem Verriegelungszylinder (2).

9. Bug- oder Heckfahrwerk nach einem der vorhergehenden Ansprüche, ferner umfassend einen Schalter zum Überwachen einer Verfahrposition des Verriegelungsbolzens (3) aus dem Verriegelungszylinder (2).

10. Bug- oder Heckfahrwerk nach Anspruch 9, mit mindestens zwei voneinander unabhängigen Schaltern zum Überwachen eines eingefahrenen und eines ausgefahrenen Zustands des Verriegelungsbolzens (3) aus dem Verriegelungszylinder (2).

11. Bug- oder Heckfahrwerk nach Anspruch 10, mit mindestens zwei unabhängigen Schaltern zum Überwachen eines eingefahrenen Zustands des Verriegelungsbolzens (3) und mindestens zwei unabhängigen Schaltern zum Überwachen eines ausgefahrenen Zustands des Verriegelungsbolzens (3).

12. Bug- oder Heckfahrwerk nach Anspruch 8, ferner umfassend einen Temperatursensor, der in Windungen des Elektromotors integriert ist, um eine Motortemperatur zu messen.

13. Luftfahrzeug mit einem Bug- oder Heckfahrwerk nach einem der vorhergehenden Ansprüche.

## Claims

1. Front and rear landing gear for a helicopter with a locking device (1) for locking the landing gear in a retracted and an extended position, with a locking cylinder (2) which is arranged on a landing gear leg (4), and a locking bolt (3) which is displaceably arranged in the locking cylinder (2), wherein in the retracted position and in the extended position of the landing gear the locking bolt (3) serves to fix the landing gear leg (4), as well as a connecting point for interacting with the locking piston (3) extended out of the locking cylinder (2), in order to fix the landing gear leg (4) in a retracted or an extended condition.

2. Front and rear landing gear according to claim 1, wherein the locking bolt (3) is arranged in the locking cylinder (2) in a displaceable manner, for example transversely to the longitudinal direction of the landing gear leg (4).

3. Front and rear landing gear according to any of the preceding claims, wherein the locking bolt (3) in a condition extended out of the locking cylinder (2) is designed to fix the landing gear leg (4).

4. Front and rear landing gear according to any of the preceding claims, wherein the connecting point is a sleeve for accommodating the locking piston (3) extended out of the locking cylinder (2).

5. Front and rear landing gear according to any of the preceding claims, wherein the locking bolt (3) is pretensioned by a spring (5).

6. Front and rear landing gear according to claim 5, comprising at least two springs (51, 52) independent of each other, in order to pretension the locking bolt (3).

7. Front and rear landing gear according to claim 5 or 6, wherein the spring pretensioning force of the locking piston (3) urges the same into a direction out of the locking cylinder (2).

8. Front and rear landing gear according to any of the preceding claims, furthermore comprising an electric or hydraulic motor for displacing the locking piston (3) in the locking cylinder (2).

9. Front and rear landing gear according to any of the preceding claims, furthermore comprising a switch for monitoring a displacement position of the locking piston (3) out of the locking cylinder (2).

10. Front and rear landing gear according to claim 9, comprising at least two switches independent of each other for monitoring a retracted and an extended condition of the locking piston (3) out of the locking cylinder (2).

11. Front and rear landing gear according to claim 10, comprising at least two independent switches for monitoring a retracted condition of the locking piston (3) and at least two independent switches for monitoring an extended condition of the locking piston (3).

12. Front and rear landing gear according to claim 8, furthermore comprising a temperature sensor which is integrated into windings of the electric motor, in order to measure a motor temperature.

13. An aircraft with a front and rear landing gear according to any of the preceding claims.

## Revendications

1. Train d'atterrissage avant ou arrière pour un hélicoptère, comprenant un dispositif de verrouillage (1) destiné au verrouillage du train d'atterrissage dans une position rentrée et une position sortie, comprenant un vérin de verrouillage (2), qui est disposé sur une jambe de train d'atterrissage (4), et un ergot de verrouillage (3), qui est disposé mobile dans le vérin de verrouillage (2), dans lequel l'ergot de verrouillage (3), dans la position rentrée et la position sortie du train d'atterrissage, sert à fixer la jambe de train d'atterrissage (4), et comprenant un point de liaison destiné à interagir avec l'ergot de verrouillage (3) sorti du vérin de verrouillage (2), pour fixer la jambe de train d'atterrissage (4) dans un état rentré et un état sorti.

2. Train d'atterrissage avant ou arrière selon la revendication 1, dans lequel l'ergot de verrouillage (3) est disposé de manière mobile dans le vérin de verrouillage (2), par exemple transversalement à la direction longitudinale de la jambe de train d'atterrissage (4).

3. Train d'atterrissage avant ou arrière selon l'une des revendications précédentes, dans lequel l'ergot de verrouillage (3), dans un état sorti du vérin de verrouillage (2), est conçu pour fixer la jambe de train d'atterrissage (4).

4. Train d'atterrissage avant ou arrière selon l'une des revendications précédentes, dans lequel le point de liaison est un manchon destiné à recevoir l'ergot de verrouillage (3) sorti du vérin de verrouillage (2).

5. Train d'atterrissage avant ou arrière selon l'une des revendications précédentes, dans lequel l'ergot de verrouillage (3) est sollicité par un ressort (5).

6. Train d'atterrissage avant ou arrière selon la revendication 5, comprenant au moins deux ressorts (51, 52) indépendants l'un de l'autre pour solliciter l'ergot de verrouillage (3).

7. Train d'atterrissage avant ou arrière selon la revendication 5 ou 6, dans lequel la force de sollicitation du ressort du piston de verrouillage (3) pousse celui-ci dans une direction sortant du vérin de verrouillage (2).

8. Train d'atterrissage avant ou arrière selon l'une des revendications précédentes, comprenant en outre un moteur électrique ou hydraulique pour déplacer l'ergot de verrouillage (3) dans le vérin de verrouillage (2).

9. Train d'atterrissage avant ou arrière selon l'une des revendications précédentes, comprenant en outre un commutateur pour surveiller une position de déplacement de l'ergot de verrouillage (3) hors du vérin de verrouillage (2).

10. Train d'atterrissage avant ou arrière selon la revendication 9, comprenant au moins deux commutateurs indépendants l'un de l'autre pour surveiller un état rentré et un état sorti de l'ergot de verrouillage (3) hors du vérin de verrouillage (2).

11. Train d'atterrissage avant ou arrière selon la revendication 10, comprenant au moins deux commutateurs indépendants pour surveiller un état rentré de l'ergot de verrouillage (3) et au moins deux commutateurs indépendants pour surveiller un état sorti de l'ergot de verrouillage (3).

12. Train d'atterrissage avant ou arrière selon la revendication 8, comprenant en outre un capteur de température, qui est intégré dans des enroulements du moteur électrique, pour mesurer la température du moteur.

13. Aéronef comprenant un train d'atterrissage avant ou arrière selon l'une des revendications précédentes.
